# EUROPÄISCHE PATENTSCHRIFT

(11) **EP 3 636 599 B1**
(45) Veröffentlichungstag und Bekanntmachung des Hinweises auf die Patenterteilung: **16.11.2022**
(21) Anmeldenummer: 19201743.2
(22) Anmeldetag: 07.10.2019
(51) Int. Cl.: C02F 1/28, C02F 11/10, C02F 1/52, C02F 3/12, C02F 3/30, C02F 11/122

(54) **VERFAHREN ZUM BETREIBEN EINES DRUCKWASSERFILTERS UND ANLAGE MIT DRUCKWASSERFILTER**
METHOD FOR OPERATING A PRESSURISED WATER FILTER AND INSTALLATION COMPRISING A PRESSURISED WATER FILTER
PROCÉDÉ DE FONCTIONNEMENT D'UN FILTRE À EAU SOUS PRESSION ET INSTALLATION POURVUE DE FILTRE À EAU SOUS PRESSION

(30) Priorität: 08.10.2018 DE 102018124744
(43) Veröffentlichungstag der Anmeldung: 15.04.2020
(73) Patentinhaber: Niersberger Wohn- und Anlagenbau GmbH & Co. KG, 91052 Erlangen (DE)
(72) Erfinder: Böhlert, Torsten, 39167 Hohe Börde OT Niederndodeleben (DE)
(74) Vertreter: Sperschneider, Alexandra

(56) Entgegenhaltungen:
- EP-A1- 3 330 231
- US-A- 3 887 461
- US-A- 3 994 804
- US-A- 4 165 289

## Beschreibung

Es werden ein Verfahren zum Betreiben eines Druckwasserfilters und eine Anlage mit einem Druckwasserfilter beschrieben. Die wesentlichen Merkmale der Erfindung sind in dem Verfahrensanspruch 1 und in dem Vorrichtungsanspruch 8 beschrieben. Weitere, bevorzugte Ausführungsformen sind in den abhängigen Ansprüchen 2-7 zu finden.

Der Druckwasserfilter kann bei der Aufbereitung von Gärresten eingesetzt werden, um die Nähr- und Spurenstoffe für eine weitere Verwendung zu gewinnen. Der Druckwasserfilter kann hierzu in einer Aufbereitungsanlage von Gärresten eingesetzt werden. Es kann auch eine Filterung von Güllen erfolgen.

### Hintergrund

In Biogasanlagen werden vorrangig Energiepflanzen wie Mais, Zuckerrüben, Gras, Getreideganzpflanzensilage (GPS), Getreide usw. vergoren. Zusätzlich sind tierische Exkremente wie Schweine- oder Rindergülle, Dung, Putenmist oder Hühnertrockenkot für die Erzeugung von Biogas erlaubt und werden auch zum Erlangen des sogenannten Güllebonus eingesetzt. Im Weiteren können auch Abfälle aus der braunen Tonne, der sogenannte Biomüll, in Biogasanlagen vergoren werden.

Diese sogenannten Substrate (insbesondere Energiepflanzen und Abfälle) stellen allein aufgrund ihrer unterschiedlichen Zusammensetzung eine große Herausforderung für eine Gärrestaufbereitung dar. Neben der unterschiedlichen Konsistenz der Stoffe liegen auch die relevanten Parameter für die Klassifizierung als Wirtschaftsdünger bzw. als Gärrestprodukt weit auseinander. Besonders sind hier die Elemente Stickstoff, Phosphor sowie viele Schwermetallverbindungen zu nennen.

### Stand der Technik

Derzeit sind zur Aufbereitung der bei der Biogaserzeugung anfallenden Gärreste, insbesondere zur Minimierung bzw. Verarbeitung von Gärresten, folgende Verfahren bekannt:
- Separation - Trennung der festen Phase vom Gärrest und somit Erzielung einer Volumenreduzierung der flüssigen Lagerung
- Bandtrockner - Trocknung der separierten Feststoffe und somit Minimierung der festen Gärreste
- Solares Verfahren - Trocknung der separierten Feststoffe durch Sonnenenergie
- Stripverfahren - Reduzierung der Stickstofffrachten im flüssigen Gärrest
- Vakuumverdampfung - Verdampfung der flüssigen Phase des Gärrestes
- Membranverfahren - Komplettaufbereitung der flüssigen Phase des Gärrestes

Die bekannten Verfahren weisen jedoch verschiedene Nachteile auf. Zum einen ermöglichen die Verfahren nur eine teilweise Aufbereitung, wobei ein nicht aufbereiteter Rest übrig bleibt. Zum anderen sind die Verfahren sehr zeit- und energieintensiv. Membranverfahren weisen zudem den Nachteil auf, dass die verwendeten Membranen - in Abhängigkeit des Verschmutzungsgrades des zu reinigenden Gärrests - häufig ausgetauscht werden müssen.

Damit das aus der Aufbereitung gewonnene Abwasser in eine Vorflut eingeleitet werden kann, bspw. in ein Kanalsystem einer Gemeinde, müssen verschiedene Verordnungen und Richtlinien beachtet und umgesetzt werden. Hierzu zählen die Wasserrahmenrichtlinie (WRRL), das Wasserhaushaltsgesetz (WHG), die Grundwasserverordnung (GrwV) und die Einleitwerte der Abwasserverordnung (AbwV).

Initiiert durch die Novelle des EEG 2014, fortgeführt durch das EEG 2017 und unter Berücksichtigung der Düngemittelverordnung 2017 befindet sich dabei die Biogasbranche im Wandel. Für viele Biogas- und Abfallvergärungsanlagen ist ein wirtschaftlicher Betrieb unter diesen Voraussetzungen nur dann möglich, wenn sie eine vollständige Nutzung der ihnen zur Verfügung stehenden Ressourcen erzielen können.

EP 3 330 231 A1 offenbart ein Verfahren zur Behandlung von Abwasser sowie eine Behandlung von Schlamm, welcher aus dem Abwasser erzeugt wurde. Hierbei werden Abwässer aus Kommunen, Landwirtschaft und Industrie behandelt, in dem sie einer Vorklärung, einer biologischen Reinigung und einer Nachklärung unterzogen werden. Der daraus erzeugte Schlamm wird dabei entwässert. Es ist weiterhin vorgesehen, dass der entwässerte Schlamm mithilfe von Pyrolyse zu Pyrolysekohle verarbeitet wird. Dadurch fällt eine Entsorgung des Schlamms weg, da dieser in Pyrolysekohle umgewandelt worden ist. Darüber hinaus wird die Pyrolysekohle mit Heißdampf zu Aktivkohle aktiviert und als Filter für das geklärte Wasser verwendet, wobei problematische Mikroverunreinigungen, wie Medikamentenrückstände, Pflanzenschutzmittel, Pflegeprodukte oder Haushaltschemikalien, herausgefiltert werden.

US 4,165,289 A offenbart eine Entsorgungs- und Behandlungsanlage für feste und flüssige Abfälle sowie ein Verfahren zum Betrieb der Anlage. Ein fester Abfall wird in einer Ofenkammer in einer Drehtrommel verbrannt, wobei die Verbrennung unter Sauerstoffmangel stattfindet. Eine in der Ofenkammer angeordnete Pyrolyse- oder Schweltrommel wird mit der freigesetzten Wärmeenergie beheizt. Organisches Material, hauptsächlich organischer Klärschlamm, wird in die Pyrolyse-Trommel gegeben und zur Erzeugung von Kohle verkohlt. Die Kohle wird in einen zweistufigen Kohlefilter zur Filtration des eingehenden Abwassers gegeben. In der zweiten Stufe des Kohlefilters wird die in der Anlage aktivierte Kohle zur Entfernung sowohl partikulärer als auch gelöster Verunreinigungen verwendet, so dass das Abwasser aus dem Filter nutzbares Wasser enthält. Schlammgesättigte Filterkohle wird im Ofen regeneriert, indem an der Filterkohle anhaftender organischer Schlamm verkohlt, oder die Filterkohle mit festem Abfall verbrannt wird.

Nachteile bestehen bei bekannten Verfahren und Anlagen darin, dass die entstehenden Produkte bei der Aufbereitung von Gärresten und Güllen nicht oder nur eingeschränkt verwendet werden können (z.B. als Dünger), wobei die erforderlichen Reinigungsschritte zur Bereitstellung einleitfähigen Wassers sehr aufwendig und zeitintensiv sind.

### Aufgabe

Es besteht daher die Aufgabe die Verarbeitung von Gärresten oder Güllen weiter zu verbessern, wobei die Abfallprodukte weiter reduziert werden und vorzugsweise keine Abfallprodukte anfallen. Zudem soll einleitfähiges Abwasser bereitgestellt werden, wobei die bei der Aufbereitung entstehende flüssige Phase als Endprodukt so weit aufbereitet sein soll, dass sämtliche Vorgaben hinsichtlich der Schadstoffbelastung eingehalten werden.

Im Weiteren soll die Aufbereitung von Gärresten oder Güllen einfacher ausgeführt sein.

### Lösung

Die vorstehend genannte Aufgabe wird durch ein Verfahren zum Betreiben eines Druckwasserfilters gelöst, wobei der Druckwasserfilter von einem Zentrat aus flüssigen Gärrest oder Gülle durchströmt wird und in dem Druckwasserfilter Pflanzenkohle als Filtermaterial aufgenommen ist, wobei die Pflanzenkohle in einem vorgelagerten Schritt aus Feststoffen gewonnen wird, die in dem Gärrest oder der Gülle enthalten sind, und wobei in dem Zentrat enthaltene Nährstoffe, Spurenelemente und/oder organische Spurenstoffe an der Pflanzenkohle adsorbiert werden.

Die Aufbereitung von Gärresten oder Güllen lässt sich hierdurch wesentlich vereinfachen, da durch die Filterung bereits sehr viele Stoffe herausgefilterten werden können. Die Belastung des gefilterten Zentrats ist daher gegenüber bekannten Filtereinrichtungen erheblich reduziert. Nachgelagerte weitere Reinigungsstufen können daher entfallen und/oder sind einfacher auszuführen, so dass die Aufbereitung beschleunigt wird und kostengünstiger ausgeführt werden kann.

Als weiterer Vorteil kann die Pflanzenkohle als Düngemittel ausgebracht werden. Die adsorbierten Stoffe werden über die Pflanzenkohle über einen langen Zeitraum von mehreren Jahren hinweg an den Boden abgegeben. Dies stellt bspw. eine deutliche Verbesserung gegenüber einem Austragen von flüssiger Gülle dar, wobei die enthaltenen Stoffe innerhalb kurzer Zeit in den Boden gelangen.

Als Druckwasserfilter kann ein gewöhnlicher Druckwasserfilter verwendet werden.

Das Verfahren umfasst zusätzlich die Schritte:
- Bereitstellen von Gärresten oder Güllen,
- Trennen von Feststoffen von dem Zentrat,
- Trocknen der Feststoffe,
- Pyrolysieren der getrockneten Feststoffe zur Erzeugung von Pflanzenkohle,
- Zuführen der Pflanzenkohle dem Druckwasserfilter.

Nach der Filterung des Zentrats im Druckwasserfilter erfolgt eine biologische Reinigung des gefilterten Zentrats.

Das Verfahren ermöglicht die Verwendung von "Abfall"produkten aus dem Gärrest- oder Gülleaufbereitungsprozess, sodass im Wesentlichen keine belasteten Reste übrig bleiben.

Ein wesentlicher Aspekt der Gülle- und/oder Gärrestaufbereitung ist die Bindung der in der Flüssigkeitsphase (Zentrat) enthaltenen wertvollen Nährstoffe und Spurenelemente in der Pflanzenkohle. Die Nährstoffe, Spurenelemente und organischen Spurenstoffe lassen sich über die beladene Pflanzenkohle bspw. gezielt als Düngemittel in der Landwirtschaft einsetzen, so dass eine Kreislaufwirtschaft gegeben ist.

Die Entfernung der Stoffe aus dem Gärrest bzw. der Gülle erfolgt über die Pflanzenkohle, welche den Flüssigkeiten (Zentrat) die wertvollen Inhaltsstoffe entzieht, diese speichert und sie später wieder gezielt an Pflanzen abgibt. Durch die Bindung der Inhaltsstoffe aus Güllen oder flüssigen Gärresten können diese kostengünstig mit einem Belebtschlammverfahren zu Brauchwasser oder einleitfähigen Abwasser aufbereitet werden. Eine nachgelagerte biologische Reinigung ist bspw. in der deutschen Patentanmeldung 10 2018 120 117.6 beschrieben, auf welche Bezug genommen wird. Die darin beschriebene Reinigung und das darin beschriebene Verfahren zur Gärrestaufbereitung können als Bestandteil das hierin beschriebene Verfahren aufweisen.

Beispielsweise können Ammoniumstickstoff, Ammonium und Phosphat in der Pflanzenkohle gespeichert werden.

Die benötigte Pflanzenkohle wird aus dem Verfahren selbst aus dem festen Gärrest über das Pyrolyseverfahren gewonnen. Die hergestellte Pflanzenkohle stellt somit ein Produkt dar und kann vertrieben oder über den Einsatz als Filtermaterial im flüssigen Gärrest aktiviert werden.

Überschüssige regionale Wirtschaftsdünger in Form von Pflanzenkohle können als Produkt z.B. auch überregional vertrieben werden.

Der Druckwasserfilter ist ein Pflanzenkohlefilter in Form eines durchströmbaren Druckwasserfilters, der im Aufstrom oder im Abstrom betrieben werden kann. Während der Zulauf (Zentrat) das Pflanzenkohlebett von unten nach oben oder umgekehrt durchströmt, werden Ammonium, Phosphor und weitere Nährstoffe an der sehr großen inneren Oberfläche der Pflanzenkohle adsorbiert.

Entscheidend für den Prozess ist die Verweilzeit des Zuflusses im Pflanzenkohlebett. Der Druckwasserfilter kann mehrere Meter dicke Schichten aus gekörnter Pflanzenkohle (Körnchen mit bspw. 0,5 bis 5 mm Durchmesser) aufweisen, die von dem Zentrat umgeben sind und durchströmt werden. Nach einer festlegbaren Zeit müssen die Pflanzenkohlepartikel aus dem Filter entfernt und regeneriert werden, da ansonsten die adsorbierten Schadstoffe wieder herausgewaschen werden können.

Die Auslegung bzw. die Dimensionierung des Druckwasserfilters erfolgt derart, dass die oft gegenläufigen Einflussfaktoren zu einem möglichst optimalen Kompromiss vereinigt werden. Neben Durchmesser, Höhe und der vorhandenen Qualität der Pflanzenkohle muss unter anderem der Druckverlust des Druckwasserfilters berücksichtigt werden.

Der Durchmesser des Druckfilters lässt sich durch die notwendige Verweilzeit bestimmen, wobei der Einsatz von Pflanzenkohle als Filtermaterial längere Verweilzeiten erforderlich macht. Der Druckwasserfilter kann bspw. derart ausgelegt sein, dass das Zentrat eine Filtergeschwindigkeit von 5 - 20 m/h erreicht.

Die Höhe des Pflanzenkohlebettes im Druckwasserfilter kann im Verhältnis zur Dicke der Adsorptionszone möglichst groß sein, damit die Pflanzenkohle gut ausgenutzt werden kann. Die Höhe des Pflanzenkohlebettes kann bspw. zwischen 1 und 3 m liegen. Durch hintereinanderschalten von mehreren Druckwasserfiltern lassen sich höhere Betten simulieren.

Der Druckverlust in einer Säule wird von der Größe und der Form der Pflanzenkohle-Partikel beeinflusst. Der Druckverlust in einem Pflanzenkohlefilter ist zudem maßgeblich für die Dimensionierung der Pumpen und Gebläse.

Nach der Filterung kann das gefilterte Zentrat (Filtrat) der biologischen Reinigung unterzogen und bspw. in ein Belebungsbecken zur weiteren Abwasserreinigung geleitet werden. Dort können weitere Verunreinigungen, wie Stickstoffund Phosphorfrachten, auf die erlaubten Einleitwerte reduziert werden. Dabei kann auch eine Reduktion von verbliebenen CSB (chemischer Sauerstoffbedarf) und BSB5 (biochemischer Sauerstoffbedarf) erfolgen.

Vor der Filterung im Druckwasserfilter kann eine zusätzliche Filterung erfolgen, wobei das Zentrat durch einen mit Sand gefüllten weiteren Druckwasserfilter geleitet wird. Weitere in der Flüssigkeit (Zentrat) enthaltene partikuläre Feststoffe (AFS - abfilterbare Stoffe, CSB) können in der Filterschicht des vor dem Pflanzenkohlefilter geschalteten Sandfilters zurückgehalten werden.

Das Trennen der Gärreste kann in einem ersten Trennschritt und einem nachgelagerten zweiten Trennschritt erfolgen. Die Aufteilung der Trennung ermöglicht die Einsparung von Flockungshilfsmittel und eine Reduzierung der benötigten Energie (Strom).

Dabei können in dem ersten Trennschritt die Gärreste oder Güllen durch Abpressen in eine feste Phase und eine flüssige Phase und in dem zweiten Trennschritt die flüssige Phase von Feststoffen durch Zentrifugieren getrennt werden. Der erste Trennschritt kann durch einen Separator erfolgen. Der Separator trennt die Gärreste in eine flüssige und in eine feste Phase durch Abpressen voneinander. Der feste Gärrest/Güllebestandteilen werden anschließend der Trocknung zugeführt. Der flüssige Gärrest/Gülle kann nach der Separation noch sehr viele Feststoffe und Verunreinigungen enthalten, welche einer effizienten Aufbereitung der flüssigen Phase entgegenstehen. Zur Entfernung der verbliebenen Schmutzstoffe kann der flüssige Gärrest/Gülle anschließend einer Dekanterzentrifuge zugeführt werden, in welcher eine weitere Trennung erfolgt. Hierzu können Flockungsmittel zugeführt werden.

In der Dekanterzentrifuge erfolgt eine 2-Phasen Trennung, wobei eine flüssige und eine feste Phase durch Zentrifugalbeschleunigung voneinander getrennt werden. Die Feststoffteilchen sammeln sich hierbei aufgrund der höheren Dichte an der Trommelwand und werden mit Hilfe einer Förderschnecke zu den Austragsöffnungen transportiert. Gleichzeitig fließt die geklärte Flüssigkeit an der Schnecke entlang in die Flüssigkeitsaustragszone.

Der daraus enthaltene Feststoff fällt in der Regel in erdiger Form mit einem Trockensubstanzgehalt von ca. 25 - 35 % an. Dieser feste Gärrest/Güllebestandteil kann direkt als Wirtschaftsdünger verwendet oder durch Kompostierung, Trocknung, Pelletierung und durch Pyrolyse zu Pflanzenkohle veredelt werden. Dabei kann der abgetrennte Feststoff mit den Feststoffen aus der Separation gemischt und der Trocknung zugeführt werden. Die flüssige Phase, das sogenannte Zentrat, wird dann in den Pflanzenkohlefilter und danach zur biologischen Abwasserreinigung weitergeleitet.

Bei dem Trennungsprozess können eine Vielzahl von Hauptnährstoffgehalten wie Gesamtstickstoff, Ammoniumstickstoff, Phosphor usw. durch den Austrag mittels Feststoff bis zu 25% reduziert werden. Die Nährstoffe müssen dann nicht mehr weiter behandelt werden, sondern verbleiben im festen Gärrest als Düngemittelbestandteil.

Die biologische Reinigung kann einen Belebtschlammprozess umfassen, in dem das gefilterte Zentrat weiter gereinigt wird, so dass einleitfähiges Abwasser bereitgestellt wird. Bei der biologischen Reinigung anfallende Schlämme können stets wieder in vorgelagerte Prozesse eingebracht werden. Somit verbleibt kein Rest, der nicht weiter behandelt oder verwertet werden kann. Bspw. können Schlämme einer vorgeschalteten Biogasanlage und Nachgärern zugeführt werden. Es ist aber auch möglich, Schlämme der Trennung zuzuführen, wobei eine Abscheidung der Feststoffe erfolgt. Die Feststoffe werden dann zu Pflanzenkohle weiter verarbeitet. Die Pflanzenkohle dient dann als Adsorber und nimmt Nährstoffe und Spurenelemente aus dem Zentrat des Gärrests auf. Die somit beladene Pflanzenkohle wird dann als Düngemittel ausgebracht und sorgt für eine dosierte Abgabe der Nährstoffe über einen langen Zeitraum, je nach Beladung der Pflanzenkohle und der natürlichen Gegebenheiten über mehrere Jahre hinweg. Gegenüber konventionellen Düngern, die oftmals nur kurzfristig hohe Dosen abgeben, wird der Vorteil einer dosierten Düngung erreicht.

Zwischen biologischen Reinigungsschritten und/oder nach einem letzten biologischen Reinigungsschritt können das aus der biologischen Reinigung gewonnene Klarfiltrat oder geklärte Abwasser von dem Belebtschlamm des Belebtschlammprozesses getrennt werden. Dies kann bspw. in Nachklärbecken erfolgen, wobei sich Feststoffe durch Sedimentation am Boden eines Beckens absetzen.

Die biologische Reinigung kann unter Zugabe von Sauerstoff und/oder die Trennung des Belebtschlamms vom Klarfiltrat oder vom geklärten Abwasser kann unter Zugabe von Fällungsmitteln und/oder Reaktionsmitteln erfolgen. Die zugeführten Fällungsmittel und/oder Reaktionsmittel unterstützen die Lösung der Feststoffe.

Die bei der Pyrolyse entstehenden Pyrolysegase können durch flammenlose Oxidation verbrannt werden und die dadurch erzeugte Wärme zur Trocknung der Feststoffe verwendet werden. Die entstehende Abwärme wird dem Prozess wieder zugeführt, so dass das Verfahren energieeffizient betrieben werden kann.

Die mit Nährstoffen, Spurenelementen und/oder organischen Spurenstoffen beladene Pflanzenkohle kann aus dem Druckfilter entnommen und als Düngemittel weiter verwendet werden. Die beladene Pflanzenkohle, auch als aktivierte Pflanzenkohle bezeichnet, kann nun als wertvoller Bodenverbesserer und Dünger in der Landwirtschaft eingesetzt werden. Die Verweildauer der Pflanzenkohle im Druckfilter hängt von der Beladung der Pflanzenkohle und der Größe der Pflanzenkohle bzw. der Oberfläche ab.

Die vorstehend genannte Aufgabe wird auch durch eine Anlage zur Durchführung eines Verfahrens der vorstehend beschriebenen Varianten gelöst, mindestens aufweisend:
- eine Trenneinrichtung zur Trennung von Feststoffen und Zentrat eines Gärrests oder von Güllen,
- eine Trocknungsanlage zur Trocknung der Feststoffe,
- einen Pyrolysereaktor, in dem die getrockneten Feststoffe zu Pflanzenkohle verarbeitet werden,
- einen Druckwasserfilter, in dem Pflanzenkohle aus dem vorgelagerten Pyrolyseprozess enthalten ist, und
- mindestens eine Reinigungsstufe zur biologischen Reinigung.

Die Trenneinrichtung kann mindestens einen Separator und eine Zentrifuge umfassen, wie bereits ausgeführt. Ebenso kann die Ausgestaltung des Druckwasserfilters entsprechend der vorstehenden Ausführungen erfolgen.

Die Anlage mit dem Druckwasserfilter kann Teil einer Aufbereitungsanlage sein, die wiederum Teil einer übergeordneten Anlage sein kann, die zur Biogaserzeugung dient. Die Aufbereitungsanlage bereitet die dabei anfallenden Gärreste oder Güllen auf, indem aktivierte Pflanzenkohle und einleitfähiges Abwasser erzeugt werden.

Eine Gärrestaufbereitung kann insbesondere weitere Schritte und Anlagenteile umfassen, wie in der Figurenbeschreibung ausführlich dargelegt.

Vor der Filterung kann zusätzlich noch eine PhosphatElimination des Zentrats durchgeführt werden, wobei das sogenannte AirPrex^{®}-Verfahren zur Anwendung kommen kann. Das Zentrat kann hierzu in ein AirPrex^{®}-Reaktorsystem geführt und dort einer Luftstrippung unterzogen werden. Durch das Ausgasen von CO₂ steigt der pH-Wert des Schlammes deutlich an. Gleichzeitig führt die Zugabe von Magnesium-Fällsalzen zur Bildung und Ausfällung von Magnesium-Ammonium-Phosphat (MAP). Die Kristalle integrieren sich homogen in die Schlammmatrix. Das gewonnene MAP, das auch als Struvit bezeichnet wird, kann anschließend als Dünger verwendet werden.

Phosphorhaltige Dünger können somit einfach erhalten werden, wobei einerseits der Phosphor aus dem Gärrest verarbeitet und andererseits den immer geringer werdenden, verfügbaren Phosphormengen Rechnung getragen werden.

Die hierin beschriebenen Verfahren und Anlagen weisen eine Vielzahl an Vorteilen auf. So sind die allgemeine Verwendbarkeit und die gute Reinigungswirkung für Abwässer zur Verminderung der Gehalte an Schwebstoffen, dem Chemischen Sauerstoffbedarf (CSB), dem Biochemischen Sauerstoffbedarf (BSB5) und den Stickstoffverbindungen (N) als vorteilhaft zu betrachten. Zudem liegen eine einfache Bedienung und ein hoher Automatisierungsgrad vor. Die Nährstoffe sind im festen Gärrest konzentriert, der als Pflanzenkohledünger über einen langen Zeitraum die adsorbierten Stoffe an den Boden abgeben kann. Das hierin beschriebene Konzept eignet sich im Weiteren für die Voll- oder Teilreinigung von Güllen aus der Tierhaltung, von Gärresten sowie von Industrieabwasser, wobei niedrige spezifische Reinigungskosten bei großen Mengen Gärrest anfallen.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

### Kurzbeschreibung der Zeichnungen

In den Zeichnungen zeigt:
- Fig. 1: ein schematisches Ablaufdiagramm der Gärrestaufbereitung;
- Fig. 2: eine schematische Darstellung von Komponenten einer Aufbereitungsanlage zur Aufbereitung von Gärresten; und
- Fig. 3: eine schematische Darstellung einer Biogasanlage mit integrierter Aufbereitungsanlage zur Aufbereitung von Gärresten.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

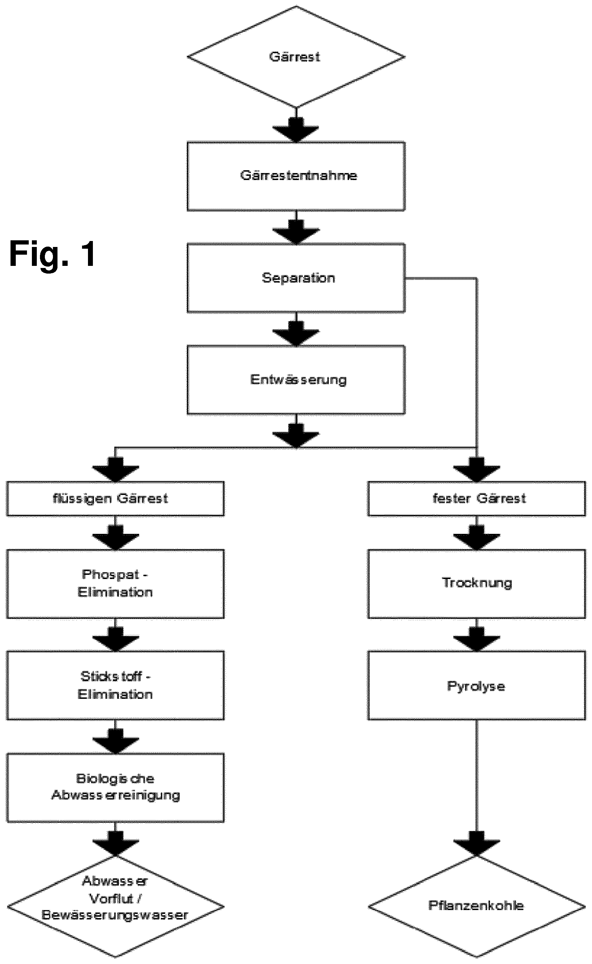

Fig. 1 zeigt den schematischen Ablauf der Gärrestaufbereitung, wobei der Gärrest aus der vorhergehenden Biogaserzeugung entnommen und einer Separation durchgeführt wird. Bei der Separation wird über einen Separator der flüssige Gärrest abgepresst. Der verbleibende feste Gärrest wird anschließend einer Trocknung zugeführt. Das Abpressen kann durch verschiedene Einrichtungen realisiert werden, wobei ein Rest an festen Bestandstoffen (Feststoffen) im flüssigen Gärrest verbleibt. Zum Abpressen können beispielswiese Siebe oder ähnliche Einrichtungen verwendet werden.

Anschließend wird der flüssige Gärrest der Entwässerung zugeführt, die in einer Dekanter-Zentrifuge erfolgt. In der Zentrifuge erfolgt eine weitere Abtrennung der Feststoffe vom flüssigen Gärrest, wie nachfolgend beschrieben.

Die bei der Separation und bei der Entwässerung verbleibenden Feststoffe (fester Gärrest) werden anschließend einer Trocknung und nach der Trocknung der Pyrolyse zur Erzeugung von Pflanzenkohle zugeführt. Die bei der Pyrolyse entstehenden Gase werden durch eine flammenlose Oxidation verbrannt. Die dabei entstehende Wärme wird vorteilhaft zur Trocknung der festen Gärreste verwendet, sodass die im Prozess entstehende Abwärme genutzt werden kann. Als Endprodukt der Pyrolyse verbleibt Pflanzenkohle mit einem Kohlenstoffanteil bis zu 80 %.

Der flüssige Gärrest, der aus der Separation und Entwässerung gewonnen wird, mit anschließend einer Phosphatelimination unterzogen. Hierzu kann insbesondere das sogenannte AirPrex^{®} -Verfahren verwendet werden. Darin wird der flüssige Gärrest einer Luftstrippung unterzogen, wobei durch das Ausgasen von CO₂ der PH-Wert des flüssigen Gärrest deutlich ansteigt. Zudem können Magnesium-Fällsalze zur Bildung und Ausfällung von Magnesium-Ammonium-Phosphat (MAP) zugeführt werden. Die dabei entstehenden Kristalle integrieren sich homogen in die Schlammmatrix. Das gewonnene MAP kann anschließend auch als Dünger verwendet werden, ohne dass weitere Aufbereitungsschritte erforderlich sind. Mit dem AirPrex^{®}-Verfahren lässt sich eine PH-Anhebung auf beispielsweise 7,8 bis 8,2 pH unter Zugabe von Magnesiumchlorid (MgCl₂) erreichen.

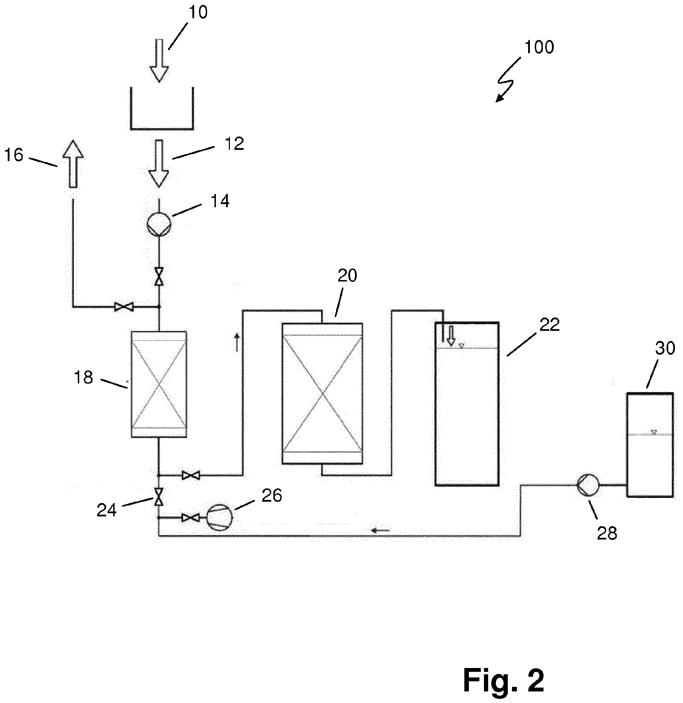

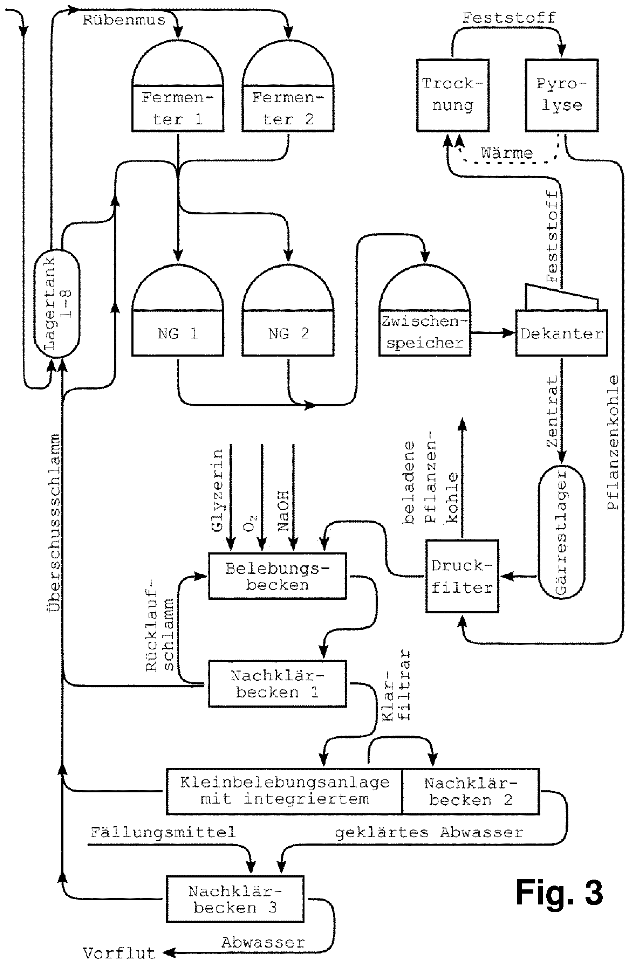

Anschließend erfolgt eine Stickstoff-Elimination, die durch einen Druckpflanzenkohlefilter 20 (siehe Fig. 2 und 3) durchgeführt wird. In dem Druckpflanzenkohlefilter 20 sind Pflanzenkohlepartikel aufgenommen. Hierbei werden die Pflanzenkohlepartikel verwendet, die in dem vorgelagerten Prozess des Verfahrens durch die Pyrolyse gewonnen werden. Die anfallenden Pflanzenkohleprodukte können daher in dem Verfahren weiter benutzt werden. In dem Druckpflanzenkohlefilter 20 wird der flüssige Gärrest (Zentrat) im Aufstrom oder im Abstrom durch die Filterschicht aus Pflanzenkohlepartikeln geleitet. Der flüssige Gärrest gibt dabei Ammonium, Phosphat, sowie andere Nährstoffe, Spurenelemente und organische Spurenstoffe an die Pflanzenkohlepartikel ab. Diese werden an der Oberfläche der Pflanzenkohlepartikel adsorbiert.

In Abhängigkeit der Dimension des Druckpflanzenkohlefilters 20 und der durchgeleiteten Menge an Zentrat sowie der Belastung des Zentrats muss die enthaltene Pflanzenkohle in bestimmbaren Abständen aus dem Druckpflanzenkohlefilter 20 entnommen und durch neue, unbeladene Pflanzenkohle ersetzt werden. Die beladene Pflanzenkohle kann anschließend als Dünger verwendet werden. Die beladene Pflanzenkohle gibt dann über einen langen Zeitraum (mehrere Jahre) die aufgenommenen Stoffe an den Boden und an die Pflanzen ab. Gegenüber konventionellen Düngern, die eine rasche Abgabe der enthaltenen Stoffe an den Boden bereitstellen, eignet sich Pflanzenkohle insbesondere für eine langzeitige Düngung. Ein Überdüngen von Böden wird dadurch ebenfalls verhindert, weil die enthaltenen Nährstoffe nicht vollständig schlagartig abgegeben werden.

Weitere in dem flüssigen Gärrest enthaltene partikuläre Feststoffe können vor dem Einleiten in den Druckpflanzenkohlefilter 20 in einem Drucksandfilter 18 entfernt werden.

Die Größe der Pflanzenkohlepartikel im Druckpflanzenkohlefilter 20 kann beispielsweise 0,5 bis 5 mm Durchmesser betragen.

Anschließend erfolgt die biologische Abwasserreinigung bei deren Endprodukt einleitfähiges Abwasser bereitgestellt wird, wie nachfolgend in Bezug auf Fig. 3 ausführlich beschrieben.

Fig. 2 zeigt eine schematische Darstellung von Komponenten einer Aufbereitungsanlage 100 zur Aufbereitung von Gärresten. Die Aufbereitungsanlage 100 umfasst zusätzlich weitere Komponenten, die in Fig. 2 nicht dargestellt sind. Als wesentliche Elemente sind der Drucksandfilter 18 und der Druckpflanzenkohlefilter 20 dargestellt. Der Pfeil 10 zeigt den Zulauf vom Dekanter. Vom Dekanter aus kann der flüssige Gärrest (Zentrat) einem Gärrestlager zugeführt werden. Alternativ kann der flüssige Gärrest auch direkt über eine Pumpe 14 in Richtung des Pfeils 12 dem Drucksandfilter 18 zugeführt werden. Der Drucksandfilter 18 und der Druckpflanzenkohlefilter 20 sind Druckwasserfilter, die von Zentrat durchströmt werden und ein Filtermaterial zur Filterung aufweisen.

Im Drucksandfilter 18 werden abfiltrierbare Stoffe im Filtersand des Sandfilters zurückgehalten. Nach dem Durchlaufen des Drucksandfilters 18 gelangt das vorgefilterte Zentrat in den Druckpflanzenkohlefilter 20, in dem die Pflanzenkohlepartikel enthalten sind, welche in einem vorgelagerten Prozessschritt aus den abgeschiedenen Feststoffen erzeugt wurde. Die Höhe des Pflanzenkohlebettes im Druckpflanzenkohlefilter 20 kann eine Höhe zwischen 1 und 3 Metern aufweisen. Die Fließgeschwindigkeit des vorgefilterten Zentrats beträgt im Druckpflanzenkohlefilter 20 5 bis 20 Meter pro Stunde, wobei geringere Filtergeschwindigkeiten vorteilhafter sind, da dabei eine größere Menge an Stoffen an der Oberfläche der Pflanzenkohlepartikel adsorbiert werden kann.

Nach der Filterung im Druckpflanzenkohlefilter 20 sind weitere Verunreinigungen und Nährstoffe (insbesondere Ammonium, Phosphor) an der Oberfläche der Pflanzenkohle adsorbiert. Das gefilterte Zentrat weist daher weniger Verunreinigungen auf, sodass in der nachfolgenden biologischen Reinigung weniger Stoffe aus dem gefilterten Zentrat entfernt werden müssen. Dies wirkt sich insbesondere positiv auf die Ausgestaltung der nachgelagerten Komponenten auf. Zudem ist der Stoffeinsatz (Flockungshilfsmittel und Fällungsmittel) reduziert, da der Anteil an Verunreinigungen geringer ist.

Die Verwendung des Druckpflanzenkohlefilters 20 mit Pflanzenkohlepartikeln, die in einem vorgelagerten Prozessschritt erhalten werden, stellt zudem eine Filterung bereit, die ohne zusätzliche Membrane oder ähnliches auskommt. Zudem kann auf externe Filterstoffe, z. B. Aktivkohle, verzichtet werden.

Die durch das Pyrolyseverfahren hergestellte Pflanzenkohle dient als Ersatz von Aktivkohlefiltern, welche separat angeschafft werden müssen. Die beladene Pflanzenkohle kann als Düngemittel zur Bodenverbesserung eingesetzt werden und dabei die aufgenommenen Stoffe über einen Zeitraum von mehreren Jahren hinweg an den Boden und Pflanzen abgeben. Pflanzenkohle, welche nicht für die Filtration benötigt wird, kann als Stalleinstreu oder sonstiges verwendet werden. Die Pflanzenkohle eignet sich aufgrund ihrer großen spezifischen Oberfläche speziell, um effizient Ammonium und Ammoniak sowie andere geruchsintensive, oftmals toxische Stoffe aus einer Gülle oder von Gärresten zu binden.

Bei der Aufbereitung von Gülle, wobei bei unbehandelter Gülle mehr als 1/3 des Stickstoffs bei der Lagerung verloren geht, kann durch die Behandlung mit Pflanzenkohle und Milchsäurebakterien fast der gesamte Stickstoff Pflanzen verfügbar gespeichert werden. Da zusätzlich die Düngeeffizienz gesteigert wird, lässt sich durch die Pflanzenkohle die Düngewirkung von Gülle entscheidend verbessern. Die Auswaschung von Gülle-Nährstoffen im Boden wird über die Speicherung in der Pflanzenkohle deutlich gebremst, wodurch eine Versauerung des Bodens vorgebeugt wird. Die mit Pflanzenkohle behandelte Gülle fördert die Bodenaktivität und den Humusaufbau. Die Böden werden dadurch langfristig aufgebaut anstatt durch toxisch wirkende Gülle ausgelaugt zu werden.

Über ein Klarwasserbecken 30 und die Pumpe 28 sowie den Kompressor 26 kann eine Rückspülung des Druck-Sandfilters 18 mit einem Wasser-Druckluft-Gemisch durchgeführt werden. Das dabei entstandene Schmutzwasser kann wie über den Pfeil 16 gezeigt abgeführt und beispielweise in einen vorgelagerten Prozessschritt der Gärrestaufbereitung zugeführt werden. Alternativ kann auch eine Rückführung des Schmutzwassers in einen Nachgärer erfolgen.

Nach der Filterung im Druckpflanzenkohlefilter 20 wird das gefilterte Zentrat dem Belebungsbecken 22 zugeführt. Von dem Belebungsbecken 22 erfolgt dann die weitere Gärrestaufbereitung, wie in Fig. 3 schematisch gezeigt.

Die Pyrolyse der Pflanzenkohle wird unter Luftabschluss bei Temperaturen zwischen 250 Grad Celsius und 1000 Grad Celsius, dem sogenannten Pyrolyseverfahren, hergestellt. Dabei wird vorwiegend Wasser abgespalten, wobei Pflanzenkohle, Synthesegas und Wärme entstehen. Die Mineralstoffe der ursprünglichen Biomasse werden in den Poren und an der Oberfläche der Pflanzenkohle gebunden. Die bei der Pyrolyse entstehenden Synthesegase werden unter anderem durch flammenlose Oxidation schadstoffarm verbrannt. Die dabei entstehende Wärme wird zur Trocknung des separierten Gärrestes verwendet (Feststoffe), sodass ein Energieautarker Prozess bei der Herstellung der Pflanzenkohle bereitgestellt wird.

Die zur Pyrolyse benötigte Wärme kann durch die Verbrennung von Biogas aus der Anlage selbst bereitgestellt werden.

Fig. 3 zeigt eine Biogasanlage mit integrierter Aufbereitungsanlage zur Gärrestaufbereitung. Die Biogasanlage dient zur Erzeugung von Biogas aus Zuckerrüben, die als Substrat zugeführt werden. Die Zuckerrüben werden in der Kampagne von der Feldrandmiete zum Biogasanlagengelände transportiert und über eine Waage erfasst, abgekippt und in die Rübenaufbereitung gefördert. Durch die Rübenaufbereitung werden die auf dem Feld vorgereinigten Rüben noch einmal entsteint, dann gewaschen und gemust. Die in der Rübenannahme anfallenden Rübenspitzen und Rübenkleinteile, können über Fördersysteme der Rübenaufbereitung wieder zugeführt werden. Diese Rückführung verkleinert erheblich die zu entsorgenden Rückstände aus der Rübenreinigung. Über wenigstens eine Pumpe, vorteilhaft wenigstens eine Rachentrichterpumpe, wird das Rübenmus in Lagertanks 1-8 (Fig. 3) gepumpt.

Die Rübenmussilage kann anschließend Fermentern über redundant ausgeführte Pumpwerke zugeführt werden. Die Fermentation weist vorteilhaft zwei Anlagenlinien auf, die jeweils aus einem Hochfermenter und einem zugehörigen Nachgärer aufgebaut sind. Über wenigstens einen Desintegration-Verfahrensschritt, einer Behandlung im Hochspannungsfeld, wird vorhandenes Restgaspotential weiter ausgeschöpft.

Das erzeugte Biogas wird durch wenigstens eine Verdichterstation abgezogen, über wenigstens eine Biogaskühlung zur Abscheidung von Kondensat geleitet und zur Biogasaufbereitungsanlage gefördert, beispielsweise über eine oder mehrere Pumpvorrichtungen und/oder Saugvorrichtungen. Die Biogasaufbereitung bereitet das Biogas über die Abscheidung des verbliebenen Wasserdampfs und der Schlechtgaskomponenten (CO₂, H₂, H₂S) entsprechend auf und übergibt das verbliebene Biomethan an die Biogasmethaneinspeisestation.

### Gärrestaufbereitung

Die im Vergärungsprozess anfallenden Gärreste werden anschließend durch die Gärrestaufbereitungsanlage so aufbereitet, dass das dabei anfallende Abwasser in einen Vorfluter eingeleitet werden kann und die Feststoffe als beladene Pflanzenkohle als Dünger verwendet werden kann. Die Gärrestaufbereitungsanlage ist dabei Bestandteil der Biogasanlage, wobei einzelne Bestandteile der Gesamtanlage sowohl für die Biogaserzeugung als auch für die Gärrestaufbereitung verwendet werden.

Der Ursprung von nichtabbaubaren Substanzen ist bspw. in der Trockensubstanz der Zuckerrübe zu finden. Darunter verbergen sich sog. Lignocellulosen und Hemicellulosen. Beide sind Bestandteile und Strukturelemente pflanzlicher Zellwände, deren Matrix aus fibrillärer, teilweise amorpher Cellulose besteht. Deren biologische Transformationsprodukte in der Abwassertechnik sind Huminsäuren, welche eine Abwasserfärbung von leicht gelb bis dunkelbraun verursachen. Diese Beschaffenheit führt dazu, dass nach der biologischen Reinigung ein persistenter, nicht abbaubarer Anteil als CSB (chemischer Sauerstoffbedarf) im geklärten Abwasser verbleibt.

### Gärrestaufbereitung: Abtrennung von überschüssigem Schmutzwasser aus dem Gärrest

In der Fermentation im Rahmen der Rübenmonovergärung entsteht ein nährstoffarmer Gärrest mit einem geringen TS(Trockensubstanz)-Gehalt. Trotz des hohen Abbaugrades der Vergärung verbleibt ein geringer Anteil an biologisch abbaubarem Kohlenstoff im Substrat. Ein weiterer Aufschluss erfolgt durch die Desintegration und nochmaligem biologischen Abbau im Zwischenspeicher. Dies führt zu einer weiteren Reduzierung der organischen Belastung und die Nährstoffbelastung nimmt weiter ab und eine mechanische Entwässerung des Gärrestes wird möglich.

Der Gärrest aus dem Zwischenspeicher, bestehend aus Gärrest, Niederschlagswasser, Waschwasser und Überschussschlamm aus der Gärrestaufbereitung, mit bspw. einem maximalen TS-Gehalt von 4% wird über eine Zuführpumpe der Dekanteranlage zur Trennung des Aufgabegutes in Flüssigphase, das sogenannte Zentrat, und die Feststoffphase zugeführt. Um eine bestmögliche Abscheidung der feinen Feststoffpartikel zu erreichen, werden Flockungshilfen (Polymere) zugeführt. Zur Fest-Flüssig-Trennung des Gärrestes vom Schmutzwasser können Flockungsmittel eingesetzt werden.

Das Gärsubstrat gelangt mit der vorteilhaft angemischten Flockungsmittelsuspension über ein Einlaufrohr in die ebenfalls rotierende Aufgabekammer. Dort wird die Suspension in Drehrichtung beschleunigt und durch Öffnungen in die ebenfalls rotierende Trommel geleitet. Im ersten Abschnitt der Trommel, dem zylindrischen Teil, bewegt sich der Feststoff unter dem Einfluss der Fliehkraft zur Trommelwand. Der herauszentrifugierte Feststoff wird von der Schnecke über den Konus zu den Austragsöffnungen der Trommel transportiert und wird an ein Förderschneckensystem übergeben, das den Feststoff der Trocknung zuführt.

Das Zentrat aus der Gärrest-Feststofftrennung wird dem Gärrestlager zugeführt. Das Volumen des Gärrestlagers beträgt bspw. V = 1.800 m³. Durch das große Volumen wird der Inhalt bei etwaigen Konzentrationsschwankungen homogenisiert. Es ist dabei auf ausreichende Durchmischung zu achten, um Feststoffablagerungen und Faulprozesse zu vermeiden.

### Gärrestaufbereitung: Behandlung des flüssigen Gärrestes in der Gärrestaufbereitung

Vom Gärrestlager wird der flüssige Gärrest in die Druckfilter (siehe Fig. 2) geleitet. Der flüssige Gärrest (Zentrat) durchläuft zuerst den Drucksandfilter 18, wobei in der Flüssigkeit enthaltene partikuläre Feststoffe (AFS, CSB) in der Filterschicht des Drucksandfilters 18 zurückgehalten werden. Der Sand des Drucksandfilters 18 wird in regelmäßigen Abständen regeneriert ("Rückspülung" - siehe Fig. 2) und/oder ausgetauscht. Anschließend gelangt das vorgefilterte Zentrat in den Druckpflanzenkohlefilter 20. Das vorgefilterte Zentrat durchströmt die Pflanzenkohlepartikel. Dabei werden Nährstoffe, Spurenelemente und/oder organische Spurenstoffe an der Oberfläche der Pflanzenkohlepartikel adsorbiert. Die Druckfilter können im Aufstrom oder Abstrom betrieben werden. Um eine gleichmäßige Adsorption der Pflanzenkohlepartikel zu erreichen kann das Zentrat abwechselnd im Aufstrom und im Abstrom betrieben werden.

### Nach einer ermittelbaren Verweildauer der

Pflanzenkohlepartikel im Druckpflanzenkohlefilter 20 werden die beladenen Pflanzenkohlepartikel entfernt und als Dünger verwendet.

Das gefilterte Zentrat wird anschließend in ein Belebungsbecken gefördert (siehe Fig. 3). In dem Belebungsbecken wird mit Hilfe von spezialisierter Bakterien-Biozönose (Belebtschlammverfahren) das Schmutzwasser biologisch weitgehend gereinigt. Hier findet die intermittierende Nitrifikation und Denitrifikation statt. In der Nitrifikations-Phase wird Sauerstoff über ein Gebläse zugegeben und der biologische Umwandlungsprozess setzt ein. In der Denitrifikations-Phase findet unter Sauerstoffmangel bei Zugabe einer Kohlenstoffquelle der Nitratabbau statt. Für das intermittierende Verfahren wird bspw. ein Wechselintervall von 1,5 Stunden belüftet zu 1,5 Stunde unbelüftet herangezogen. Das geforderte Verhältnis C/N für eine weitgehende Denitrifikation beträgt bspw. 3,5. Da der Bedarf an leicht verfügbarem Kohlenstoff im Vergleich zur bereitgestellten Fracht im Gärrest für eine ausreichende Versorgung der Bakterien nicht ausreicht, ist die Zuführung einer Kohlenstoffquelle erforderlich, die in Form von Glycerin zugeführt wird. Bei anderen Biogasanlagen oder Gärrestaufbereitungsanlagen können auch andere Kohlenstoffquellen zugeführt werden.

Bei dem Prozess handelt es sich um eine Schwachlastreinigung mit Schwerpunkt der Nitrifikation und Denitrifikation zur weitgehenden Stickstoffelimination. Diese Art der Reinigung resultiert aus dem Überschuss der Nährstoffe (N) im Vergleich zu verfügbaren Kohlenstoffverbindungen.

Der Belebtschlammprozess mit N/DN findet in einem Behälter statt und erfordert eine präzise Steuerung der Belüftungsund Durchmischungszeiten, d.h. intermittierende Belüftung. In der belüfteten Phase wird der Ammonium-Stickstoff entsprechend der Reaktion zum Nitrit und weiter zum Nitratstickstoff umgewandelt:

NH₄⁺ + O₂ + 2 HCO₃⁻ → NO₃⁻ + 2 CO₂ + H₂O

In der ungelüfteten Phase erfolgen die Zugabe der externen C-Quelle (Glyzerin) und eine intensive Durchmischung, damit eine Denitrifikation entsprechend der folgenden Gleichung stattfinden kann:

2NO₃⁻ + 2 H⁺ + 2,5C organisch → N₂ + H₂O + 2,5 CO₂

Die Zugabe des Glyzerins gleicht den zur Denitrifikation benötigten Kohlenstoffdefizit im Verhältnis BSB4/NH4-N = 4 aus.

Da der Gärrest nicht über eine ausreichend hohe Säurekapazität verfügt, kann der pH-Wert infolge der Nitrifikation und Denitrifikation unter 7,0 fallen. In diesem pH-Bereich sind jedoch sowohl die Nitrifikations- und die Sauerstoffausnutzungsrate stark beeinträchtigt.

Voraussetzung für hohe Umsatzgeschwindigkeiten der Nitrifikation ist, dass die gebildeten Säure-Ionen vom Hydrogencarbonatpuffer des Abwassers schnell abgefangen werden. Pro mg abgebautem NH4-N werden bspw. 0,14 mmol (1kg NH4-N - 140 mol) Säurekapazität verbraucht. Bei der Denitrifikation wird das durch die Nitrifikanten gebildete Nitrat zu elementarem Stickstoff abgebaut. Im Gegensatz zur Nitrifikation werden bei der Denitrifikation Säure-Ionen (H+) verbraucht. Theoretisch liefert die Denitrifikation 50 % der zuvor in der Nitrifikation verbrauchten Säurekapazität zurück. Pro mg abgebautem NO3-N werden 0,07 mmol/l Säurekapazität gewonnen. Die tatsächliche Säurekapazität hängt von dem Puffervermögen des jeweiligen Abwassers ab.

In den Fermentern können bspw. TAC-Werte (Carbonat-Pufferkapazität) um 2000 mg/l vorliegen, was einer Säurekapazität von ca. 20 mmol/l entspricht. Der rechnerische Bedarf an Säurekapazität auf Grundlage solcher Werte und einer beispielsweise angenommenen Ablaufkapazität von 1,5 mmol/l aus der ersten Belebungsstufe beträgt 37,5 mmol/l.

Da das Puffervermögen des Gärrestes unzureichend sein kann, müssen Maßnahmen zur Puffererhöhung und gegen den Abfall des pH-Wertes getroffen werden. Dies erfolgt über die Zudosierung von Natronlauge als alkalischen Hilfsstoff.

Da der Gärrest je nach Beschaffenheit des Einsatzstoffes auch arm an Phosphor sein kann und das erforderliche Verhältnis von BSB zu Phosphor 100:1 beträgt, muss diesem ergänzend zur Prozessstabilität Phosphorsäure zugeführt werden.

Vom ersten Belebungsbecken wird der Gärrest zu einem ersten Nachklärbecken gefördert. Das erste Nachklärbecken dient der Trennung des Belebtschlammes und des geklärten Schmutzwassers nach dem Belebtschlammprozess.

Für die eigentliche Feststofftrennung ist in der der Regel die Fläche maßgeblich, jedoch spielt für eine effiziente Trennung auch die Höhe des Beckens eine Rolle. In der vertikalen Richtung bilden sich im Klärprozess dabei diverse Zonen aus: Klarwasserzone mit mind. h = 0,5 m, Trennzone und Speicher- und Eindickzone, deren Ausdehnung u.a. von den Schlammeigenschaften (SVI) abhängt.

Der Gärrest wird von oben dem Becken zugeführt. Über Schwerkraft setzen sich Schlammpartikel am Behälterboden ab und werden über einen langsam rotierenden Rundsaugräumer mit Zentralantrieb abgesaugt. Der abgesaugte Schlamm wird zum einem wieder dem Belebungsbecken zur Erhöhung der aktiven Bakterienmasse für Nitrifikation und Denitrifikation zurückgeführt (ca. 1,8-2,0 m³/h) und zum anderen wird der überschüssige Schlamm in die Nachgärer zum biologischen Abbau im Rahmen der Fermentation gepumpt. Im Becken aufschwimmender Schlamm wird abgezogen und ebenfalls dem oder den Nachgärern zugeführt. Der so gereinigte flüssige Gärrest (, das sogenannte Klarfiltrat, läuft in die Klarwasserrinne über und wird zur weiteren Aufreinigung zu einer Kleinbelebungsanlage mit integrierter Nachklärung (KBA mit Nachklärbecken NKB 2) weitergepumpt.

### Abwasser-/Gärrestaufbereitung: Behandlung des restlichen Abwassers aus der Gärrestaufbereitung

Die Kleinbelebungsanlage kann als Kompaktkleinanlage in Containerbauweise mit integrierter Nachklärung (KBA mit integriertem NKB 2) ausgebildet sein. Diese Belebungsstufe kombiniert das Belebtschlamm- und Tauchkörperverfahren. Neben dem Belebtschlamm entwickelt sich auf rotierenden Tauchkörpern eine sessile Biofilm-Biozönose. Ein Vorteil dieser Kombination liegt in dem hohen Spezialisierungsgrad des Biofilms zum Abbau schwer abbaubarer Substrate.

In der Anlage werden alle vorgenannten Reinigungsschritte und Verfahren bis auf die Denitrifkation abermals durchlaufen. Um eventuell überschüssigen Phosphor und CSB, der je nach Beschaffenheit des Einsatzstoffes auftreten kann, fällen und abscheiden zu können, wird dem Klarfiltrat im Zulauf zur KBA ein Fällmittel, wie z.B. Aluminium-Chlorid, zugesetzt. Der anfallende Schlamm wird abgezogen und den Nachgärern zugeführt. Das verbleibende Abwasser wird in den Klarzonen der Nachklärung NKB 2 abgezogen und dem Nachklärbecken NKB 3 zugeführt.

Aufgrund der erwarteten Reinigungsleistung der vorangegangenen Stufen dient diese weitere Reinigungsstufe zur weiteren Reduzierung des "schweren" CSBs hauptsächlich durch spezialisierte Biofilm-Bakterien. Da der Kleinbelebungsanlage verhältnismäßig wenige Substrate zufließen, ist die interne Rezirkulation des Belebtschlamms nicht notwendig. Der produzierte Überschussschlamm wird am Tiefpunkt der Nachklärsektionen der KBA abgezogen und dem Nachgärer 1 oder Nachgärer 2 zur Nachgärung zugeführt.

Sämtliche während des biologischen Reinigungsprozesses des Schmutzwassers nach der Abtrennung von Gärrest an den entsprechenden Stufen anfallenden Überschussschlämme können in die Nachgärer geleitet werden.

Die Überschussschlämme werden in den Nachgärern teilweise anaerob abgebaut und die verbliebenen Reste zusammen mit dem Feststoffen aus dem Vergärungsprozess aus dem Zwischenspeicher der Zentrifuge zur Entwässerung zugeführt.

### Abwasseraufbereitung: Behandlung des restlichen Abwassers aus der Gärrestaufbereitung (weitergehende Abwasserbehandlung)

Als weitergehende Reinigungsstufe zur finalen Reduzierung des CSB-Wertes und ggf. der Korrektur des P_{ges}.-Gehaltes wird das Abwasser dem NKB 3 zugeführt, der als Absetzbehälter mit integriertem Lamellapacket ausgebildet ist. Das Lamellapacket hat die Aufgabe die Klärfläche durch schräg eingebrachte Platten zu erhöhen und den Rückhalt der feinen Flocken aus der Fällungsprozess zu verbessern. Dem Zulauf wird ein effektives Fällungsmittel zugegeben, um die für die Einleitung geforderte Werte (CSB, P_{ges.}) ggf. zu korrigieren.

Zum Abbau des persistenten CSB-Gehalts wird dem Abwasser ein weiteres Fällmittel, wie beispielsweise PAC (Polyaluminiumhydroxidchlorid), zugegeben. Der anfallende Schlamm wird im Nachklärbecken über Schwerkraft abgeschieden und zum Nachgärer 1 abgezogen.

Zur Fällung/Flockung in der weitergehenden Abwasserreinigung zur sicheren Einhaltung der CSB/P - Einleitkonzentrationen eignen sich alternativ auch andere Chemikalien.

Eine weitere Behandlungsstufe kann das Ausfällen von Magnesium-Amonium-Phosphat (MAP) mittels eines sogenannten AirPrex^{®}-Verfahrens umfassen. Hierdurch lässt sich die biologische Phosphat-Elimination verbessern, wobei der Gärrest nach einem Fermenter in ein Reaktorsystem geführt und dort einer Luftströmung unterzogen wird. Durch Luftzufuhr erfolgt ein Ausgasen von CO₂ wodurch der ph-Wert des Gärrestschlammes deutlich ansteigt.

Zusätzlich wird Magnesiumchlorid (MgCl₂) zugeführt, was zur Bildung und Ausfällung von Magnesium-Amonium-Phosphat (MAP) führt. Die so entstandenen MAP-Kristalle können in dem Reaktor wachsen und setzen sich am Boden des Reaktorsystems aufgrund von Sedimentation ab. Anschließend können die MAP-Kristalle über ein Fördersystem einer Waschanlage zur Aufbereitung der Kristalle, beispielsweise als Düngemittel, zugeführt werden.

### Bestandteile der Gärrestaufbereitungsanlage

Dem Zwischenspeicher können im Betrieb der Biogasanlage mit zusätzlicher Gärrestaufbereitung sowohl Schmutzwasser, inklusive Regenwasser, aus Absetzcontainern, Spülwasser aus der Dekanteranlage sowie Niederschlagswasser aus der Verladefläche der Dekanteranlage und Gärreste aus den Nachgärern zugeführt werden. Dem Zwischenspeicher, der als Vorstufe zur Gärrestaufbereitung dient, werden daher sämtliche anfallende Gärreste und Flüssigkeiten zugeführt.

Die Lagertanks, die Nachgärer, die Fermenter, das Belebungsbecken, die Nachklärbecken und die Kleinbelebungsanlage sind über Rohrleitungen untereinander verbunden und können je nach Bedarf über Schieber, Pumpen und Ventile zum Austausch von Stoffströmen miteinander verschaltet werden.

Der in den Figuren gezeigte Aufbau der Gesamtanlage zur Gärrestaufbereitung und Biogaserzeugung zeichnet sich dadurch aus, dass als Endprodukt vorflutreifes Abwasser und beladene Pflanzenkohle bereitgestellt werden.

### Bezugszeichenliste

- 10: Pfeil
- 12: Pfeil
- 14: Pumpe
- 16: Pfeil
- 18: Drucksandfilter
- 20: Druckpflanzenkohlefilter
- 22: Belebungsbecken
- 24: Ventil
- 26: Kompressor
- 28: Pumpe
- 30: Klarwasserbecken
- 100: Aufbereitungsanlage

## Patentansprüche

1. Verfahren zum Betreiben eines Druckwasserfilters, wobei der Druckwasserfilter von einem Zentrat aus flüssigen Gärrest oder Gülle durchströmt wird, wobei nach der Filterung des Zentrats im Druckwasserfilter eine biologische Reinigung des gefilterten Zentrats erfolgt, und in dem Druckwasserfilter Pflanzenkohle als Filtermaterial aufgenommen ist, wobei die Pflanzenkohle in einem vorgelagerten Schritt aus Feststoffen mit den Schritten
- Bereitstellen von Gärresten oder Güllen,
- Trennen der Feststoffe von dem Zentrat,
- Trocknen der Feststoffe,
- Pyrolysieren der getrockneten Feststoffe zur Erzeugung von Pflanzenkohle und
- Zuführen der Pflanzenkohle dem Druckwasserfilter gewonnen wird, die in dem Gärrest oder der Gülle enthalten sind, und wobei in dem Zentrat enthaltene Nährstoffe, Spurenelemente und/oder organische Spurenstoffe an der Pflanzenkohle adsorbiert werden.

2. Verfahren nach Anspruch 1, wobei vor der Filterung im Druckwasserfilter eine zusätzliche Filterung erfolgt, wobei das Zentrat durch einen mit Sand gefüllten Druckwasserfilter (18) geleitet wird.

3. Verfahren nach Anspruch 1 oder 2, wobei das Trennen der Gärreste in einem ersten Trennschritt und einem nachgelagerten zweiten Trennschritt erfolgt.

4. Verfahren nach Anspruch 3, wobei in dem ersten Trennschritt die Gärreste durch Abpressen in eine feste Phase und eine flüssige Phase und in dem zweiten Trennschritt die flüssige Phase von Feststoffen durch Zentrifugieren getrennt werden.

5. Verfahren nach einem der Ansprüche 1 bis 4, wobei die biologische Reinigung einen Belebtschlammprozess umfasst und zwischen biologischen Reinigungsschritten und/oder nach einem letzten biologischen Reinigungsschritt das aus der biologischen Reinigung gewonnene Klarfiltrat oder geklärte Abwasser von dem Belebtschlamm des Belebtschlammprozesses getrennt werden.

6. Verfahren nach Anspruch 5, wobei die biologische Reinigung unter Zugabe von Sauerstoff und/oder die Trennung des Belebtschlamms vom Klarfiltrat oder vom geklärten Abwasser unter Zugabe von Fällungsmitteln und/oder Reaktionsmitteln erfolgt.

7. Verfahren nach einem der Ansprüche 1 bis 6, wobei die bei der Pyrolyse entstehenden Pyrolysegase durch flammenlose Oxidation verbrannt werden und die dadurch erzeugte Wärme zur Trocknung der Feststoffe verwendet wird.

8. Anlage zur Durchführung eines Verfahrens nach einem der Ansprüche 1 bis 7, mindestens aufweisend:
- eine Trenneinrichtung zur Trennung von Feststoffen und Zentrat eines Gärrests oder einer Gülle,
- eine Trocknungsanlage zur Trocknung der Feststoffe,
- einen Pyrolysereaktor, in dem die getrockneten Feststoffe zu Pflanzenkohle verarbeitet werden,
- mindestens einen Druckwasserfilter (20), in dem Pflanzenkohle aus dem vorgelagerten Pyrolyseprozess enthalten ist, und
- mindestens eine Reinigungsstufe zur biologischen Reinigung.

## Claims

1. Method for operating a pressurised water filter, wherein a pressurised water filter is streamed by a centrate of liquid fermentation residue or slurry, wherein after filtering the centrate a biological purification of the filtered centrate happens inside the pressurised water filter, and in the pressurised water filter plant carbon is arranged as filter material, wherein the plant carbon is obtained in a preliminary step from solid substances with the following steps
- providing fermentation residues or slurries,
- separating the solid substances from the centrate,
- drying the solid substances,
- pyrolyzing the dried solid substances to produce plant carbon and
- production of the plant carbon, and
- supplying the plant carbon to the pressurised water filter,
contained in the liquid fermentation residue or the slurry, and wherein in the centrate contained nutrients, trace elements and or organic trace elements are absorbed on the plant carbon.

2. Method according to claim 1, wherein before the filtration in the pressurised water filter an additional filtration occurs, wherein the centrate is conducted through a pressurised water filter (18) which is filled with sand.

3. Method according to claim 1 or 2, wherein the separation of the fermentation residues occurs in a first separation step and in a downstream second separation step.

4. Method according to claim 3, wherein in the first separation step the fermentation residues are separated into a solid phase and a liquid phase by off-pressing and in the second separation step the liquid phase is separated from solid substances by centrifugation.

5. Method according to any of the claims 1 to 4, wherein the biological purification comprises an activated sludge process and between biological purification steps and/or after a last biological purification step the clear filtrate obtained from the biological purification or the clarified sewage were separated from the activated sludge of the activated sludge process.

6. Method according to claim 5, wherein the biological purification occurs with addition of oxygen and/or the separation of the activated sludge from the clear filtrate or the clarified sewage by adding of precipitants and/or reactants.

7. Method according to any of the claims 1 to 6, wherein by the pyrolyze produced pyrolyze-gases were burned by flameless oxidation and the thereby produced heat is used for drying the solid substances.

8. Facility for operating a method according to any of the claims 1 to 7, comprising at least:
- a separation equipment for separating solid substances and centrate of fermentation residue or slurry,
- a drying facility for drying the solid substances,
- a pyrolysis-reactor, in which the dried solid substances were processed to plant carbon,
- at least a pressurised water filter (20), in which the plant carbon from the preliminary pyrolyzing process is contained, and
- at least a purification-stage for biological purification.

## Revendications

1. Procédé pour faire fonctionner un filtre à eau sous pression, dans lequel le filtre à eau sous pression est traversé par un centrifugat composé de digestat ou lisier liquide, dans lequel un nettoyage biologique du centrifugat filtré s'effectue après la filtration du centrifugat dans le filtre à eau sous pression, et du charbon de biomasse est reçu en tant que matériau filtrant dans le filtre à eau sous pression, dans lequel le charbon de biomasse est obtenu au cours d'une étape située en amont à partir de matières solides avec les étapes
- de fourniture de digestats ou de lisiers,
- de séparation des matières solides du centrifugat,
- de séchage des matières solides,
- de pyrolyse des matières solides séchées pour la production de charbon de biomasse et
- d'amenée du charbon de biomasse au filtre à eau sous pression, qui sont contenus dans le digestat ou le lisier, et dans lequel des éléments nutritifs, oligo-éléments et/ou substances-traces organiques contenus dans le substrat sont adsorbés sur le charbon de biomasse.

2. Procédé selon la revendication 1, dans lequel une filtration supplémentaire s'effectue avant la filtration dans le filtre à eau sous pression, dans lequel le centrifugat est acheminé à travers un filtre à eau sous pression (18) rempli de sable.

3. Procédé selon la revendication 1 ou 2, dans lequel la séparation des digestats s'effectue dans une première étape de séparation et une deuxième étape de séparation située en aval.

4. Procédé selon la revendication 3, dans lequel dans la première étape de séparation les digestats sont séparés par pressage en une phase solide et une phase liquide et dans la deuxième étape de séparation la phase liquide est séparée des matières solides par centrifugation.

5. Procédé selon l'une quelconque des revendications 1 à 4, dans lequel le nettoyage biologique comprend un processus par boues activées et entre les étapes de nettoyage biologique et/ou après une dernière étape de nettoyage biologique le filtrat clair obtenu à partir du nettoyage biologique ou les eaux usées clarifiées sont séparés des boues activées du processus par boues activées.

6. Procédé selon la revendication 5, dans lequel le nettoyage biologique s'effectue par ajout d'oxygène et/ou la séparation des boues activées du filtrat clair ou des eaux usées clarifiées s'effectue avec ajout d'agents de précipitation et/ou de réactifs.

7. Procédé selon l'une quelconque des revendications 1 à 6, dans lequel les gaz de pyrolyse produits lors de la pyrolyse sont brûlés par oxydation sans flamme et la chaleur générée de cette manière est utilisée pour le séchage des matières solides.

8. Installation pour la mise en œuvre d'un procédé selon l'une quelconque des revendications 1 à 7, présentant au moins :
- un dispositif de séparation pour la séparation de matières solides et de centrifugat d'un digestat ou d'un lisier,
- une installation de séchage pour le séchage des matières solides,
- un réacteur de pyrolyse, dans lequel les matières solides séchées sont traitées en charbon de biomasse,
- au moins un filtre à eau sous pression (20), dans lequel le charbon de biomasse provenant du processus de pyrolyse situé en amont est contenu, et
- au moins une étape de nettoyage pour le nettoyage biologique.
